(19)

Europäisches
Patentamt
European
Patent Office
Office européen
des brevets

(11) **EP 4 397 512 A1**

(12) **EUROPEAN PATENT APPLICATION**

(43) Date of publication:
**10.07.2024 Bulletin 2024/28**

(21) Application number: **23216666.0**

(22) Date of filing: **14.12.2023**

(51) International Patent Classification (IPC):
**B60C 23/06** $^{(2006.01)}$

(52) Cooperative Patent Classification (CPC):
**B60C 23/061; B60C 23/062**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.01.2023 JP 2023001059**

(71) Applicant: **Sumitomo Rubber Industries, Ltd.
Kobe-shi, Hyogo 651-0072 (JP)**

(72) Inventors:
• **MORITA, Naoki
Kobe-shi, 651-0072 (JP)**
• **MASUDA, Hidetaka
Kobe-shi, 651-0072 (JP)**
• **MURAKAMI, Keiichi
Kobe-shi, 651-0072 (JP)**

(74) Representative: **TBK
Bavariaring 4-6
80336 München (DE)**

(54) **DEVICE, METHOD, AND PROGRAM FOR DETECTING DECREASED PRESSURE OF TIRE**

(57)     An apparatus for detecting decreased pressure includes a speed acquisition unit, a first index calculation unit, a second index calculation unit, and a decreased pressure detection unit. The speed acquisition unit acquires rotation speeds of a plurality of tires mounted to a vehicle. The first index calculation unit calculates a first decreased pressure index as an index for comparing the rotation speeds of the plurality of tires based on the rotation speeds. The second index calculation unit calculates a second decreased pressure index as an index different from the first decreased pressure index. The decreased pressure detection unit determines that at least one tire has a decreased pressure when both of the first decreased pressure index and the second decreased pressure index indicate that the at least one tire has a decreased pressure.

Fig. 3

START

ACQUIRE ROTATION SPEED
INFORMATION FROM WHEEL SPEED
SENSORS, AND CONVERT THEM TO
ROTATION SPEEDS V1 TO V4 — S1

CALCULATE FIRST DECREASED
PRESSURE INDEX — S2

CALCULATE SECOND
DECREASED PRESSURE INDEX — S3

P1 > Th1 ? — S4    NO

YES

P21 > Th21 ?
OR
P22 > Th22 ? — S5    NO

YES

GENERATE AND OUTPUT
DECREASED PRESSURE ALERT — S6

END

EP 4 397 512 A1

**Description**

FIELD OF INVENTION

The present invention relates to an apparatus for detecting decreased pressure, a method for detecting decreased pressure, and a program for detecting decreased pressure of tire mounted on a wheel.

BACKGROUND

In order to cause a vehicle to travel comfortably, it is important for air pressures of tires to be adjusted. This is because when the air pressure falls below a proper value, it can cause a problem that ride comfort and fuel efficiency become poor. In view of this, conventionally, a system that automatically detects a decreased pressure of a tire (Tire Pressure Monitoring System; TPMS) has been under study. Information that the tire has a decreased pressure can be used, for example, to alert a driver.

As a system of detecting a decreased pressure of a tire, in addition to a system of directly measuring the air pressure of the tire by, for example, attaching a pressure sensor to the tire, there is a system of indirectly evaluating the decreased pressure of the tire by using other index values. As an example of such a system, there is known a dynamic loaded radius (DLR) system. The DLR system uses a phenomenon that a tire with decreased pressure has a decreased dynamic loaded radius due to the tire being squashed when traveling, and therefore rotates at a higher speed, and estimates the decreased pressure of the tire from the rotation speed of the tire (JP 2005-053263A, for example).

JP 2005-053263A discloses a correction apparatus that uses the DLR system, and mentions three index values referred to as DEL 1 to DEL 3 as decreased pressure index values for evaluating a decreased pressure in the DLR system. In JP 2005-053263A, DEL 1 to DEL 3 are defined as follows. Note that V1 to V4 are rotation speeds of the left front wheel tire, the right front wheel tire, the left rear wheel tire, and the right rear wheel tire, respectively.

$$DEL\ 1 = \{(V1 + V4)/2 - (V2 + V3)/2\}/\{(V1 + V2 + V3 + V4)/4\} \times 100\ (\%)$$

$$DEL\ 2 = \{(V1 + V2)/2 - (V3 + V4)/2\}/\{(V1 + V2 + V3 + V4)/4\} \times 100\ (\%)$$

$$DEL\ 3 = \{(V1 + V3)/2 - (V2 + V4)/2\}/\{(V1 + V2 + V3 + V4)/4\} \times 100\ (\%)$$

When a tire has a decreased pressure, the rotation speed increases, and therefore the decreased pressure index values, such as DEL 1 to DEL 3, also change. Accordingly, by setting decreased pressure index values of when the pressure has decreased just as much as a decreased pressure amount being a detection target as threshold values (decreased pressure threshold values), it becomes possible to detect a decreased pressure.

In a method for detecting decreased pressure as disclosed in JP 2005-053263A, first, an initialization process is necessary prior to executing the decreased pressure detecting process. The initialization is a process of determining the above-described decreased pressure threshold values, or specifying offset amounts due to initial differences of the above-described decreased pressure index values, and storing them in an on-vehicle device or the like. This process usually starts by the driver inputting an initialization instruction to the TPMS when, for example, regulating the pressures of tires, and the process is completed when the vehicle has traveled for a certain period of time (for example, around 10 minutes to 20 minutes) at various speeds. Therefore, in a case where a decrease of pressure occurs while executing the initialization or in a case where the driver inputs the initialization instruction when a tire is in a pressure-decreased state, there is a risk of the decreased pressure failing to be detected appropriately. On the other hand, when the above-described decreased pressure threshold values are set to predetermined fixed values in order to omit the initialization, there is a possibility of the above-described decreased pressure index values exceeding (or not reaching) the predetermined decreased pressure threshold values due to individual differences of the tires or the like even though none of the tires actually has a decreased pressure, and thus there is a risk of erroneously issuing an alert of a decreased pressure.

The present invention has an object to provide an apparatus for detecting decreased pressure, a method for detecting decreased pressure, and a program for detecting decreased pressure of a tire that allow appropriately detecting a decreased pressure of a tire without performing initialization.

SUMMARY of INVENTION

An apparatus for detecting decreased pressure according to a first aspect of the present invention includes a speed acquisition unit, a first index calculation unit, a second index calculation unit, and a decreased pressure detection unit. The speed acquisition unit is configured to acquire rotation speeds of a plurality of tires mounted to a vehicle from rotation speed signals indicating the rotation speeds of the plurality of tires. The first index calculation unit is configured to calculate a first decreased pressure index as an index for comparing the rotation speeds of the plurality of tires based on the rotation speeds. The second index calculation unit is configured to calculate a second decreased pressure index as an index different from the first decreased pressure index and as an index that changes when at least one tire among the plurality of tires has a decreased pressure. The decreased pressure detection unit is configured to determine that at least one tire among the plurality of tires has a decreased pressure when both of the first decreased pressure index and the second decreased pressure index indicate that the at least one tire has a decreased pressure.

An apparatus for detecting decreased pressure according to a second aspect is the apparatus for detecting decreased pressure according to the first aspect, wherein the first decreased pressure index is an index that converges to a first value as the rotation speeds of the respective plurality of tires become closer to a mean value of the rotation speeds of the plurality of tires, and diverges from the first value as a rotation speed of the at least one tire diverges from the mean value.

An apparatus for detecting decreased pressure according to a third aspect is the apparatus for detecting decreased pressure according to the first aspect or the second aspect, wherein the second decreased pressure index is an index calculated based on the rotation speed signals.

An apparatus for detecting decreased pressure according to a fourth aspect is the apparatus for detecting decreased pressure according to any of the first aspect to the third aspect, wherein the second decreased pressure index is an index that converges to a second value as frequency characteristics of rotation speed signals of coaxial tires among the plurality of tires become closer to one another, and diverges from the second value as the frequency characteristics of the rotation speed signals of the coaxial tires diverge from one another.

An apparatus for detecting decreased pressure according to a fifth aspect is the apparatus for detecting decreased pressure according to any of the first aspect to the fourth aspect, wherein the second decreased pressure index is an index for comparing a ratio of an integration value of a gain in a second frequency band with respect to an integration value of a gain in a first frequency band in a frequency spectrum of the rotation speed signal between the coaxial left and right wheel tires.

An apparatus for detecting decreased pressure according to a sixth aspect is the apparatus for detecting decreased pressure according to any of the first aspect to the fifth aspect, wherein the second decreased pressure index is an index for comparing torsional resonance frequencies of the plurality of tires between the coaxial left and right wheel tires.

An apparatus for detecting decreased pressure according to a seventh aspect is the apparatus for detecting decreased pressure according to any of the first aspect to the sixth aspect, wherein the second decreased pressure index is an index for comparing regression coefficients between left and right of the vehicle. The regression coefficient expresses a relationship between a comparison value for comparing a rotation speed of a driving wheel tire with a rotation speed of a following wheel tire among the rotation speeds, and a value indicating a driving force of the vehicle.

An apparatus for detecting decreased pressure according to an eighth aspect is the apparatus for detecting decreased pressure according to any of the first aspect to the seventh aspect, further including a decreased pressure alert unit that is configured to generate a decreased pressure alert when the decreased pressure detection unit determines that the at least one tire has a decreased pressure.

A method for detecting decreased pressure according to a ninth aspect is a method for detecting decreased pressure of tire executed by one or a plurality of computers, and includes the following. Further, a program for detecting decreased pressure according to a tenth aspect causes one or a plurality of computers to execute the following:

(1) Acquiring rotation speeds of a plurality of tires mounted to a vehicle from rotation speed signals indicating the rotation speeds of the plurality of tires;
(2) Calculating a first decreased pressure index as an index for comparing the rotation speeds of the plurality of tires based on the rotation speeds;
(3) Calculating a second decreased pressure index as an index different from the first decreased pressure index and as an index that changes when at least one tire among the plurality of tires has a decreased pressure; and
(4) Determining that at least one tire among the plurality of tires has a decreased pressure when both of the first decreased pressure index and the second decreased pressure index indicate that the at least one tire has a decreased pressure.

With the present invention, it is possible to omit traveling for initialization and detect a decreased pressure of a tire in a prompt and appropriate manner.

BRIEF DESCRIPTION OF DRAWINGS

FIG. 1 is a schematic diagram illustrating an apparatus for detecting decreased pressure according to one embodiment of the present invention being mounted on a vehicle.

FIG. 2 is a block diagram illustrating an electrical configuration of the apparatus for detecting decreased pressure.

FIG. 3 is a flowchart illustrating a flow of a decreased pressure detecting process.

FIG. 4A indicates frequency spectrums of rotation speed signals of rear axle tires when both of the rear axle tires have normal internal pressure.

FIG. 4B indicates frequency spectrums of rotation speed signals of rear axle tires when only a left rear wheel tire has a decreased pressure of 30%.

FIG. 5A indicates frequency spectrums of rotation speed signals of front axle tires when both of the front axle tires have normal internal pressure.

FIG. 5B indicates frequency spectrums of rotation speed signals of front axle tires when only a left front wheel tire has a decreased pressure of 40%.

FIG. 6A is a graph in which wheel torques and left and right slip rates of when the respective tires all have normal internal pressure are plotted.

FIG. 6B is a graph in which wheel torques and left and right slip rates of when only a left front wheel tire has a decreased pressure of 40%.

FIG. 7 is a graph indicating a difference in slopes of regression lines in FIG. 6A and FIG. 6B.

DETAILED DESCRIPTION OF THE PREFERRED EMBODIMENTS

Hereinafter, an apparatus for detecting decreased pressure, a method for detecting decreased pressure, and a program for detecting decreased pressure according to an embodiment of the present invention will be described with reference to the drawings.

<1. Configuration of Apparatus for Detecting Decreased Pressure>

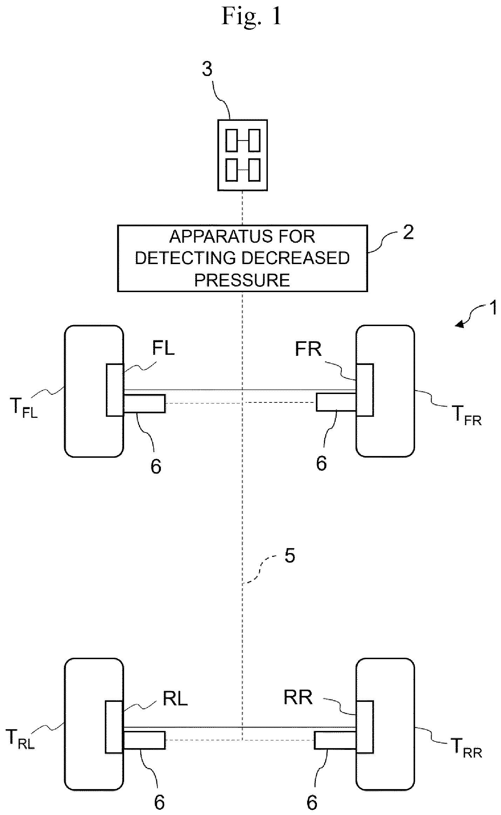

FIG. 1 is a schematic diagram illustrating an apparatus for detecting decreased pressure 2 according to the present embodiment being mounted on a vehicle 1. The vehicle 1 is a four-wheeled vehicle, and is provided with a left front wheel FL, a right front wheel FR, a left rear wheel RL, and a right rear wheel RR. The apparatus for detecting decreased pressure 2 has a function of detecting a decreased pressure of at least one of tires $T_{FL}$, $T_{FR}$, $T_{RL}$, $T_{RR}$ attached to the above-described wheels. When a decreased pressure of the tires $T_{FL}$, $T_{FR}$, $T_{RL}$, $T_{RR}$ is detected, the apparatus for detecting decreased pressure 2 issues an alert of the decreased pressure via an alert indicator 3 mounted on the vehicle 1. The flow of such a decreased pressure detecting process will be described in detail below.

Pressure-decreased states of the tires $T_{FL}$, $T_{FR}$, $T_{RL}$, $T_{RR}$ are detected based on wheel speeds (rotation speeds of the tires $T_{FL}$, $T_{FR}$, $T_{RL}$, $T_{RR}$) of the left front wheel FL, the right front wheel FR, the left rear wheel RL, and the right rear wheel RR. A wheel speed sensor 6 is attached to each of the left front wheel FL, the right front wheel FR, the left rear wheel RL, and the right rear wheel RR, and the respective wheel speed sensors 6 detect signals (which indicate the rotation speeds of the tires $T_{FL}$, $T_{FR}$, $T_{RL}$, $T_{RR}$, and therefore, hereinafter, sometimes referred to as rotation speed signals) indicating the wheel speeds of the wheels to which the respective wheel speed sensors 6 are attached to. The wheel speed sensors 6 are connected to the apparatus for detecting decreased pressure 2 via a communication line 5. The rotation speed signals detected by the wheel speed sensors 6 are transmitted to the apparatus for detecting decreased pressure 2 in real time via the communication line 5. In the present embodiment, the rotation speed signals are used to calculate a first decreased pressure index and a second decreased pressure index different from the first decreased pressure index described below. The first decreased pressure index and the second decreased pressure index are each an index for detecting a decreased pressure.

As the wheel speed sensors 6, anything that can detect the wheel speeds of the wheels FL, FR, RL, RR while traveling can be used. For example, a type of sensor that measures a wheel speed from an output signal of an electromagnetic pickup can be used, or a type of sensor that generates electricity using rotation like a dynamo and measures a wheel speed from a voltage at this time can also be used. An attachment position of the wheel speed sensor 6 is not particularly limited, and can be selected as appropriate according to the type of sensor insofar as the wheel speed can be detected.

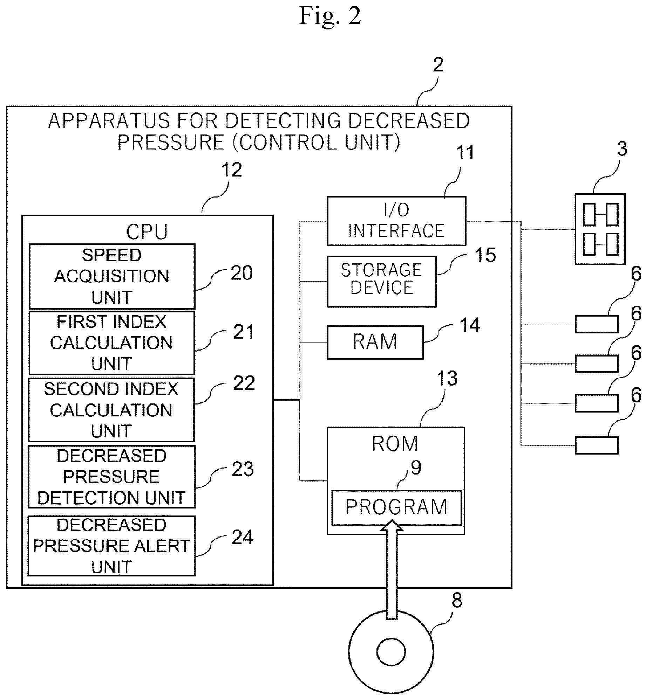

FIG. 2 is a block diagram illustrating an electrical configuration of the apparatus for detecting decreased pressure 2. The apparatus for detecting decreased pressure 2 as a hardware is a control unit (on-vehicle computer) mounted on the vehicle 1, and as illustrated in FIG. 2, includes an I/O interface 11, a CPU 12, a ROM 13, a RAM 14, and a storage device 15 that is non-volatile and rewritable. The I/O interface 11 is a communication device for realizing communication with an external device, such as the wheel speed sensors 6 and the alert indicator 3. The ROM 13 stores a program 9 for controlling operations of respective units of the vehicle 1. The program 9 is written into the ROM 13 from a storage medium 8, such as a CD-ROM. The CPU 12 reads out the program 9 from the ROM 13 and executes the program 9, and thereby virtually operates as a speed acquisition unit 20, a first index calculation unit 21, a second index calculation unit 22, a decreased pressure detection unit 23, and a decreased pressure alert unit 24. The operations of the respective units 20 to 24 will be described in detail below. The storage device 15 is constituted of a hard disk, a flash memory, and the like. A storage place of the program 9 need not be the ROM 13, and may be the storage device 15. The RAM 14 and the storage device 15 are used as appropriate for computation of the CPU 12.

The alert indicator 3 can be realized in any form, such as a liquid crystal display element or a liquid crystal monitor, insofar as the fact of a tire having a decreased pressure can be reported to a user. While the alert indicator 3 can also be attached to a position selected as appropriate, it is preferable to be provided at a position that is easily noticeable by the driver, such as on an instrument panel. When the control unit (apparatus for detecting decreased pressure 2) is connected to a car navigation system, a monitor for the car navigation can be used as the alert indicator 3. When a monitor is used as the alert indicator 3, an icon or character information displayed on the monitor can serve as an alert.

<2. Decreased Pressure Detecting Process>

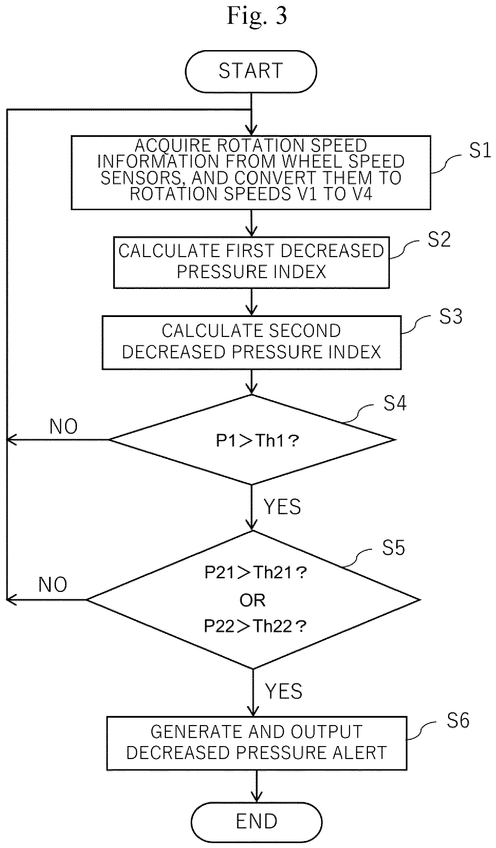

Hereinafter, with reference to FIG. 3, a decreased pressure detecting process for detecting a decreased pressure of at least one of the tires $T_{FL}$, $T_{FR}$, $T_{RL}$, $T_{RR}$ will be described. The decreased pressure detecting process illustrated in FIG. 3 uses a dynamic loaded radius (DLR) system but does not require initialization by the driver or traveling for the initialization. The decreased pressure detecting process illustrated in FIG. 3, for example, starts when the vehicle 1 starts traveling, and ends when the traveling stops.

First, the speed acquisition unit 20 acquires rotation speed signals from the respective wheel speed sensors 6 attached to the wheels FL, FR, RL, RR. The speed acquisition unit 20 converts the acquired rotation speed signals to the rotation speeds V1 to V4 of the tires $T_{FL}$, $T_{FR}$, $T_{RL}$, $T_{RR}$ (step S1), respectively.

Subsequently, the first index calculation unit 21 calculates a first decreased pressure index P1 based on the rotation speeds V1 to V4 (step S2). The first decreased pressure index P1 is an index for comparing the rotation speeds of the respective tires, and is defined in the present embodiment as follows.

[Expression. 1]

$$P1 = abs\left(\frac{V_{FL} + V_{RR}}{V_{FR} + V_{RL}} - 1\right) * 100$$

As the above formula, the first decreased pressure index P1 in the present embodiment is an index for comparing average rotation speeds between a pair of the tire $T_{FL}$ and the tire $T_{RR}$, and a pair of the tire $T_{FR}$ and the tire $T_{RL}$. When none of the tires $T_{FL}$, $T_{FR}$, $T_{RL}$, $T_{RR}$ has a decreased pressure (when they have normal internal pressure), the first decreased pressure index P1 takes a value close to zero, but when, for example, any one of the tires $T_{FL}$, $T_{FR}$, $T_{RL}$, $T_{RR}$ has a decreased pressure, the first decreased pressure index P1 takes a value deviated from zero. In the present embodiment, a value that the first decreased pressure index P1 possibly takes when any one of the tires $T_{FL}$, $T_{FR}$, $T_{RL}$, $T_{RR}$ has a decreased pressure by a predetermined proportion from the normal internal pressure is determined in advance as a first decreased pressure threshold value Th1 for detecting a decreased pressure. The first decreased pressure threshold value Th1 is assumed to be stored in advance in the storage device 15 or the ROM 13.

Subsequently, the second index calculation unit 22 calculates the second decreased pressure index (step S3). The second decreased pressure index is an index that changes when at least any one of the tires $T_{FL}$, $T_{FR}$, $T_{RL}$, $T_{RR}$ has a decreased pressure, and is not particularly limited insofar as it is an index different from the first decreased pressure index P1 for comparing the rotation speeds of the respective tires. The second decreased pressure index of the present embodiment is calculated based on the rotation speed signals of the respective wheel speed sensors 6, and is different from the first decreased pressure index P1 in that two second decreased pressure indexes P21 and P22 are calculated for the front axle and the rear axle, respectively. Hereinafter, the second decreased pressure indexes P21 and P22 of the present embodiment will be described in detail.

The second decreased pressure indexes P21 and P22 of the present embodiment are indexes for comparing a ratio of an integration value of a gain in a second frequency band F2 with respect to an integration value of a gain in a first frequency band F1 between coaxial left and right wheel tires in a frequency spectrum of a rotation speed signal.

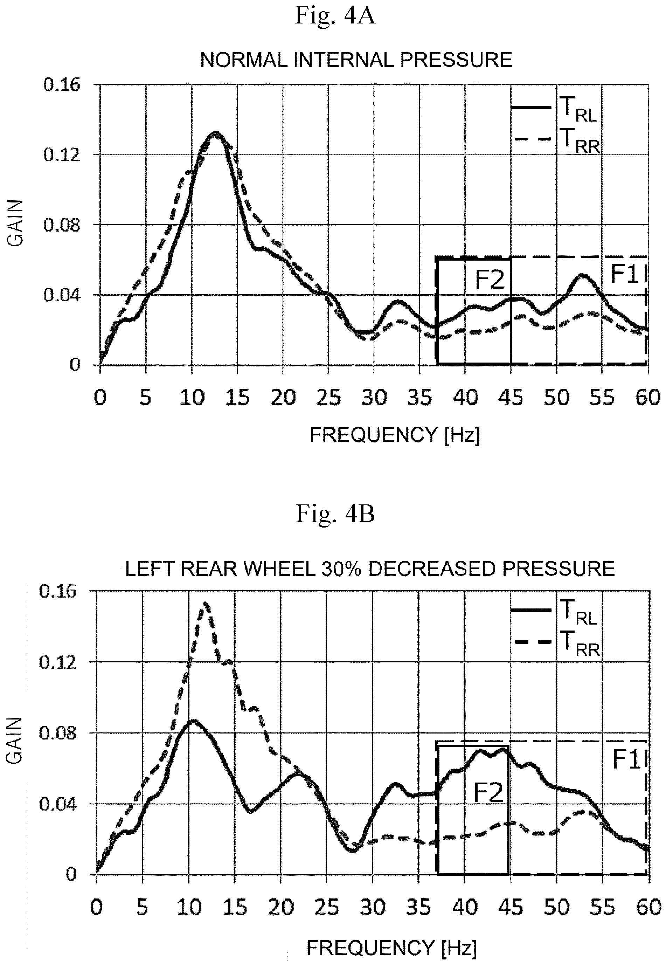

Generally, when a tire has a decreased pressure, a contact area with a road surface increases, an input from the road surface increases, and therefore the form of the frequency spectrum of the rotation speed signal changes. However, since this frequency spectrum is susceptible to influence of disturbance, such as left and right unbalanced loads or a state of the road surface, it is not easy to detect the decreased pressure based on the actual change in the form of the frequency spectrum. FIGS. 4A and 4B are charts comparing the frequency spectrums of the rotation speed signals of the rear axle tires $T_{RL}$, $T_{RR}$ between a case where both the tires $T_{RL}$, $T_{RR}$ have normal internal pressure and a case where only the tire $T_{RL}$ has a decreased pressure of 30%. The inventors have discovered as a result of serious examination that, in a frequency spectrum of a rotation speed signal of a tire, a ratio R of an integration value of a gain in a bandwidth close to a torsional resonance frequency with respect to an integration value of a gain in a bandwidth including a high frequency bandwidth increases as the decreased pressure of the tire increases. That is, when either of the tires attached to the coaxial left and right wheels has a decreased pressure, this can be detected by comparing the above-described ratio R of the integration value of the gain between the two coaxial left and right tires.

Based on the above-described principle, the second decreased pressure indexes P21 and P22 in the present embodiment are each defined as follows. Note that $R_{OO}$ indicates a ratio of the integration value of the gain in the bandwidth close to the torsional resonance frequency (torsional resonance frequency bandwidth) with respect to the integration value of the gain in the bandwidth including a high frequency bandwidth in a frequency spectrum of a rotation speed signal of a tire $T_{OO}$ attached to a wheel "OO."

[Expression. 2]

$$P21 = \frac{R_{FL} - R_{FR}}{\min(R_{FL}, R_{FR})}$$

[Expression. 3]

$$P22 = \frac{R_{RL} - R_{RR}}{\min(R_{RL}, R_{RR})}$$

In the present embodiment, a value that is possibly taken by the second decreased pressure index P21 when either of the tires $T_{FL}$ and $T_{FR}$, which are the front axle tires, has a decreased pressure by a predetermined proportion from the normal internal pressure is determined in advance as a second decreased pressure threshold value Th21 for detecting the decreased pressure of the front axle tires. Similarly, a value that is possibly taken by the second decreased pressure index P22 when either of the tires $T_{RL}$ and $T_{RR}$, which are the rear axle tires, has a decreased pressure by a predetermined proportion from the normal internal pressure is determined in advance as a second decreased pressure threshold value Th22 for detecting the decreased pressure of the rear axle tires. Similarly to the first decreased pressure threshold value Th1, the second decreased pressure threshold values Th21 and Th22 are assumed to be stored in advance in the storage device 15 or the ROM 13.

With reference to FIG. 3 again, in step S3, the second index calculation unit 22 performs high-speed Fourier transformation on the rotation speed signals of the tires $T_{FL}$, $T_{FR}$, $T_{RL}$, $T_{RR}$, and derives the respective frequency spectrums thereof. An evaluation of frequency characteristics can be performed by, in addition to the high-speed Fourier transformation process, a time series estimation of an autoregressive model, a dispersion of time-series data, or the like. Next, the second index calculation unit 22 calculates ratios $R_{FL}$, $R_{FR}$, $R_{RL}$, $R_{RR}$ of the integration value of the gain in the second frequency band F2 with respect to the integration value of the gain in the first frequency band F1 of the frequency spectrums of the rotation speed signals of the respective tires $T_{FL}$, $T_{FR}$, $T_{RL}$, $T_{RR}$. Here, the first frequency band F1 is a bandwidth (for example, 37 Hz to 61 Hz) including a high frequency bandwidth in which noise from the road surface is dominant, and the second frequency band F2 is a torsional resonance frequency bandwidth (for example, 37 Hz to 45 Hz) of the tire. The integration value of the gain is an integration value of a spectrum in the above-described frequency bandwidths. Subsequently, the second index calculation unit 22 assigns the respective ratios $R_{FL}$, $R_{FR}$ and $R_{RL}$, $R_{RR}$ of the integration values of the gain to the above formulas, and calculates the second decreased pressure indexes P21 and P22.

Subsequently, the decreased pressure detection unit 23 determines whether or not the first decreased pressure index P1 indicates that at least one tire has a decreased pressure based on the first decreased pressure index P1 calculated in step S2 (step S4). In the present embodiment, the decreased pressure detection unit 23 determines that the first decreased pressure index P1 indicates that at least one tire has a decreased pressure (YES) when the first decreased pressure index P1 exceeds the above-described first decreased pressure threshold value Th1 (P1 > Th1), and determines that the first decreased pressure index P1 does not indicate that at least one tire has a decreased pressure (NO) when the first decreased pressure index P1 is equal to or less than the first decreased pressure threshold value Th1 (P1 ≤ Th1).

When it is determined in step S4 that the first decreased pressure index P1 does not indicate a tire having a decreased pressure (NO), the decreased pressure detection unit 23 determines that none of the tires of the vehicle 1 has a decreased pressure. Then, the process returns to step S 1 and the steps up to the present are executed again.

When it is determined in step S4 that the first decreased pressure index P1 indicates that at least one tire has a decreased pressure (YES), the decreased pressure detection unit 23 determines whether or not the second decreased pressure index P21 indicates that one of the front axle tires has a decreased pressure based on the second decreased pressure index P21 calculated in step S3 (step S5). In the present embodiment, the decreased pressure detection unit 23 determines that the second decreased pressure index P21 indicates that one of the front axle tires has a decreased pressure when the second decreased pressure index P21 exceeds the above-described second decreased pressure threshold value Th21 of the front axle (P21 > Th21), and determines that the second decreased pressure index P21 does not indicate that one of the front axle tires has a decreased pressure when the second decreased pressure index P21 is equal to or less than the second decreased pressure threshold value Th21 of the front axle (P21 ≤ Th21).

Further, based on the second decreased pressure index P22 calculated in step S3, the decreased pressure detection unit 23 determines whether or not the second decreased pressure index P22 indicates that one of the rear axle tires has a decreased pressure. In the present embodiment, the decreased pressure detection unit 23 determines that the second decreased pressure index P22 indicates that one of the rear axle tires has a decreased pressure when the second decreased pressure index P22 exceeds the above-described second decreased pressure threshold value Th22 of the rear axle (P22 > Th22), and determines that the second decreased pressure index P22 does not indicate that one of the rear axle tires has a decreased pressure when the second decreased pressure index P22 is equal to or less than the second decreased pressure threshold value Th22 of the rear axle (P22 ≤ Th22).

In summary, in step S5, it is determined whether or not at least one of the second decreased pressure index P21 and the second decreased pressure index P22 indicates that either the left or right tire has a decreased pressure (P21 > Th21 or P22 > Th22). When it is determined that at least one of the second decreased pressure indexes P21 and P22 indicates that either the left or right tire has a decreased pressure, the decreased pressure detection unit 23 determines that at least one tire of the vehicle 1 has a decreased pressure (YES), and the subsequent step S6 is executed. On the other hand, when it is determined that both of the second decreased pressure indexes P21 and P22 do not indicate that either the left or right tire has a decreased pressure (P21 ≤ Th21 and P22 ≤ Th22), the decreased pressure detection unit 23 determines that none of the tires of the vehicle 1 has a decreased pressure (NO). Then, the process returns to step S 1, and the steps up to the present are executed again.

In step S6, the decreased pressure alert unit 24 generates a decreased pressure alert that reports the driver that a tire has a decreased pressure, and outputs this via the alert indicator 3 or the like. The alert may be a character indicating the decreased pressure of the tire, or may be an icon or a graphic determined in advance. The alert may include a display that reports a wheel or an axle of which pressure is believed to be decreasing. Instead of or in addition to this, the decreased pressure alert unit 24 may be configured to generate the decreased pressure alert in the form of an audio, a buzzer sound, or the like, and be output from a speaker of the vehicle 1 or the like.

<3. Feature>

With the apparatus for detecting decreased pressure 2 according to the above-described embodiment, the decreased pressure detecting process can be executed without executing traveling for initialization. Therefore, when a tire has a decreased pressure, this can be promptly detected and be reported to the driver. In addition, even when the driver performs an operation to deactivate the decreased pressure alert on the apparatus for detecting decreased pressure 2 without regulating the pressure of the tire after the decreased pressure alert has been output, the decreased pressure is detected and the decreased pressure alert is output again. Accordingly, the tire is less likely to be left in the pressure-decreased state.

In the apparatus for detecting decreased pressure 2 according to the above-described embodiment, it is determined that at least one tire has a decreased pressure when both of the first decreased pressure index and the second decreased pressure index indicate that at least one tire has a decreased pressure. Therefore, it is possible to reduce the probability of erroneously issuing an alert of a tire having a decreased pressure when none of the tires actually has a decreased pressure. There is assumed a case where, when none of the tires has a decreased pressure, a probability of the first decreased pressure index exceeding the first decreased pressure threshold value is a/100, and a probability of at least one of the second decreased pressure indexes (that is, at least one of P21, P22) exceeding the second decreased pressure threshold value is b/100. When none of the tires has a decreased pressure, a probability of both the first decreased pressure index and a second decreased pressure index exceeding the respective decreased pressure threshold values is ab/10000, and is extremely low compared with the probabilities of a/100 and b/100. It is also considerable to set the first decreased pressure threshold value significantly high in order to lower the probability of a/100. However, in that case, the first decreased pressure threshold value needs to be a value of the first decreased pressure index when the tire has a considerable degree of decreased pressure (for example, having a 50% decreased pressure), and the decreased pressure might not be able to be detected promptly. The same applies to the second decreased pressure indexes as well. Therefore, the apparatus for detecting decreased pressure 2 according to the above-described embodiment can be said to achieve both a prompt decreased pressure detection and an appropriate decreased pressure detection with little false alert.

<4. Modification>

While one embodiment of the present invention has been described above, the present invention is not limited to the above-described embodiment, and various kinds of changes are allowed insofar as not departing from the gist of the present invention. For example, the following changes can be made. Moreover, the outline of the following modification can be appropriately combined.

(1) The first decreased pressure index P1 need only be an index for comparing the rotation speeds of the respective tires, and is not limited to the formula defined in the above-described embodiment. For example, the first decreased pressure index P1 may be any of the DELS 1 to 3 described above. Also, for example, the first decreased pressure index P1 may be defined by the following formulas. However, compared with the first decreased pressure index P1 defined in the following formulas, the first decreased pressure index P1 in the above-described embodiment is preferable in that it has high robustness against disturbance.

[Expression. 4]

$$P1 = abs\left(\frac{V_{FL} + V_{FR}}{V_{RL} + V_{RR}} - 1\right) * 100$$

[Expression. 5]

$$P1 = abs\left(\frac{V_{FL} + V_{RL}}{V_{FR} + V_{RR}} - 1\right) * 100$$

Further, the first decreased pressure index P1 may be a value including a positive/negative sign, and the first decreased pressure threshold value may be determined in consideration of the positive/negative sign. In summary, the first decreased pressure index P1 need only be an index that converges to a predetermined value as the rotation speeds of the respective tires come close to a mean value of the rotation speeds of all the tires, and diverges from the predetermined value as the rotation speed of at least one tire diverges from the mean value of the rotation speeds of all the tires.

(2) The apparatus for detecting decreased pressure according to the above-described embodiment is not limited to a certain drive system of four-wheeled vehicles, and is also applicable to any FF vehicle, FR vehicle, MR vehicle, and 4WD vehicle. Further, it is not limited to four-wheeled vehicles, and is also applicable to three-wheeled vehicles, six-wheeled vehicles, or the like.

(3) The order of executing the respective steps of the method for detecting decreased pressure according to the above-described embodiment can be changed as appropriate. For example, step S3 and step S5 may be executed after step S2 and step S4 have been executed. Also, step S2 and step S4 may be executed based on the rotation speeds V1 to V4 after step S3 and step S5 have been executed based on the rotation speed information from the wheel speed sensors 6. Moreover, the order in which step S2 and step S3, and step S4 and step S5 are executed are each interchangeable. Further, even when it is determined as "NO" in step S4, step S5 may be executed afterwards, and reversely, when it is determined as "NO" in step S5, step S4 may be executed afterwards.

(4) The defined formulas of the second decreased pressure indexes are not limited to the above-described embodiment. One that is appropriately changed from the defined formulas of the above-described embodiment can be used insofar as it is an index for comparing the ratios of the integration value of the gain in the bandwidth close to the torsional resonance frequency with respect to the integration value of the gain in the high frequency bandwidth between the left and right wheel tires.

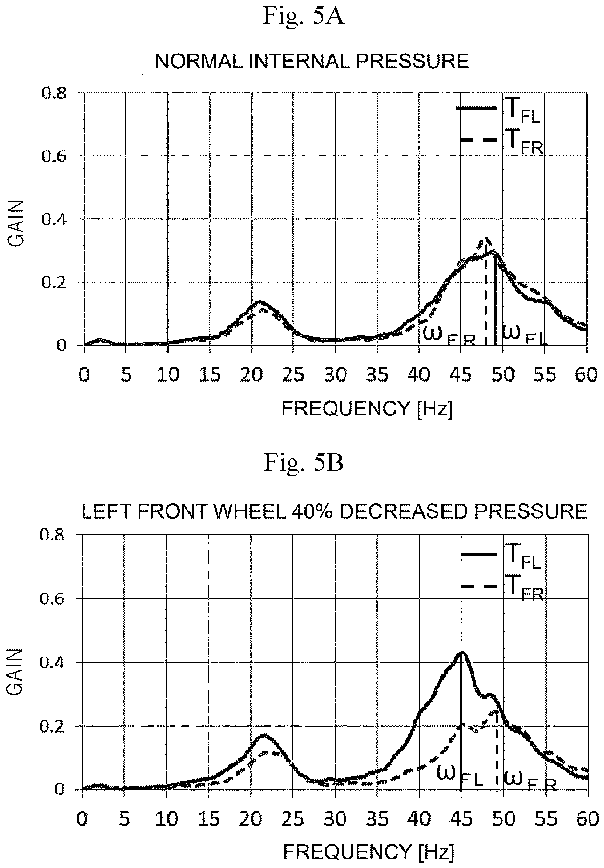

(5) Further, other indexes can be used as the second decreased pressure indexes. For example, a torsional resonance frequency $\omega$ of a tire is known to change from a value at the normal internal pressure when the tire has a decreased pressure. FIGS. 5A and 5B are charts comparing the frequency spectrums of the rotation speed signals of the front axle tires $T_{FL}$, $T_{FR}$ between a case where both the tires $T_{FL}$, $T_{FR}$ have normal internal pressure, and a case where only the tire $T_{FL}$ has a decreased pressure of 40%. From FIG. 5A, it can be seen that the torsional resonance frequencies $\omega_{FL}$, $\omega_{FR}$ of the tires $T_{FL}$, $T_{FR}$ are positioned near 48 Hz to 49 Hz when the tires $T_{FL}$, $T_{FR}$ have normal internal pressure. Meanwhile, from FIG. 5B, it can be seen that, when only the tire $T_{FL}$ has a decreased pressure of 40%, only the torsional resonance frequency $\omega_{FL}$ is positioned near 45 Hz. By using this fact, indexes for comparing the torsional resonance frequencies $\omega_{FL}$, $\omega_{FR}$, $\omega_{RL}$, $\omega_{RR}$ derived for the tires $T_{FL}$, $T_{FR}$, $T_{RL}$, $T_{RR}$ respectively, between the coaxial left and right wheel tires can be assumed to be the second decreased pressure indexes P21 and P22. For example, the second decreased pressure indexes P21 and P22 can be respectively defined by the following formulas.

$$P21 = \omega_{FL} - \omega_{FR}$$

$$P22 = \omega_{RL} - \omega_{RR}$$

Alternatively, the second decreased pressure indexes P21 and P22 can be respectively defined by the following formulas.

$$P21 = \omega_{FL}/\omega_{FR}$$

$$P22 = \omega_{RL}/\omega_{RR}$$

Note that, in the defined formulas of the above-described second decreased pressure indexes P21 and P22, $\omega_{FL}$ and $\omega_{FR}$, and $\omega_{RL}$ and $\omega_{RR}$ are each interchangeable.

Similarly to the above-described embodiment, regarding the respective second decreased pressure indexes P21 and P22, the second decreased pressure threshold values Th21 and Th22 can be determined based on values when one of the left and right tires has a decreased pressure of a predetermined proportion. That is, the second decreased pressure indexes need only be indexes that converge to predetermined values as the frequency characteristics of rotation speeds of coaxial tires become closer to one another between the left and right tires, and diverge from the predetermined values as the frequency characteristics of the rotation speeds of the coaxial tires diverge from one another between the left and right tires.

(6) The second decreased pressure indexes used for the front axle tires and the rear axle tires may be different from one another. For example, indexes for comparing the above-described torsional resonance frequencies between the left and right may be applied to the front axle tires, indexes for comparing the above-described ratios R of the gain integration values between the left and right may be applied to the rear axle tires, or the opposite may be performed.

(7) In another example, the second decreased pressure indexes can be indexes that compare regression coefficients C1 and C2 between the left and right wheel tires. The regression coefficients C1 and C2 indicate relationships between comparison values H1 and H2 that compare the rotation speed of the driving wheel tire with the rotation speed of the following wheel tire, and a value indicating a driving force F of the vehicle 1. When the vehicle 1 is a front wheel driving car, the comparison values H1 and H2 can be respectively defined, for example, by the following formulas.

$$H1 = (V1 - V3)/V3$$

$$H2 = (V2 - V4)/V4$$

Alternatively, when the vehicle 1 is a front wheel driving car, the comparison values H1 and H2 can be defined as follows. That is, the comparison values H1 and H2 need only be indexes indicating a slip rate S per driving wheel tire, and insofar as it is equivalent to the above-described slip rate S, may be defined by any formula.

$$H1 = V1/V3$$

$$H2 = V2/V4$$

Note that, when the vehicle 1 is a rear wheel driving car, the comparison values H1 and H2 can be respectively defined by the following formulas, for example.

$$H1 = (V3 - V1)/V1$$

$$H2 = (V4 - V2)/V2$$

Alternatively, when the vehicle 1 is a rear wheel driving car, the comparison values H1 and H2 can also be defined as the following.

$$H1 = V3/V1$$

$$H2 = V4/V2$$

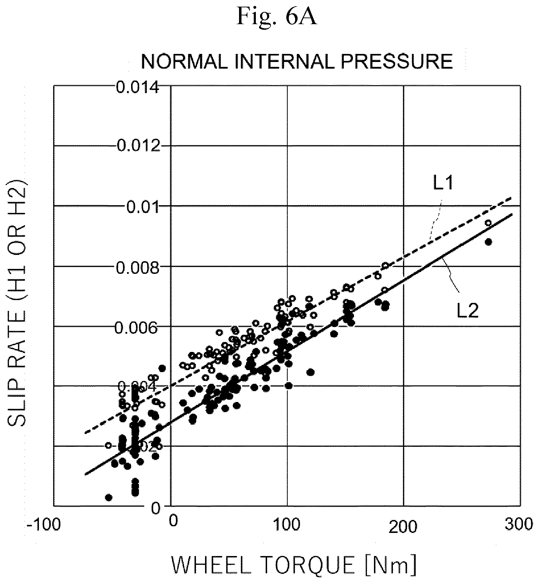

According to the examination of the present inventors, the slip rates S of the driving wheel tires, that is the comparison values H1 and H2, each change according to the driving force F of the vehicle 1 or a value indicating the driving force of the vehicle 1, such as a wheel torque WT. The relationship between the driving force For the wheel torque WT and the slip rate S can be regressed to a straight line as indicated in FIG. 6A. The driving force F can be derived, for example, based on an anteroposterior acceleration $\alpha$ of the vehicle 1, a value obtained from a driving source of the vehicle 1 (such as an engine torque, an engine rotation number, a motor torque, or a motor rotation number), and the like. The anteroposterior acceleration $\alpha$ can be derived, for example, based on an output signal from an acceleration sensor, the rotation speeds V1 to V4, a positioning signal of a satellite positioning system, and the like. The wheel torque WT can be derived, for example, based on an output signal from a wheel torque sensor, and the like. That is, the vehicle 1 may include at least one of an acceleration sensor, a wheel torque sensor, and a communication device to be connected to a satellite positioning system in addition to the above-described wheel speed sensors 6.

The formulas of regression lines L1 and L2 indicated in FIG. 6A can each be expressed as the following using regression coefficients C1, D1, C2, and D2. The wheel torque WT in the formulas is replaceable with another value indicating the driving force.

$$L1: H1 = C1 \times WT + D1$$

$$L2: H2 = C2 \times WT + D2$$

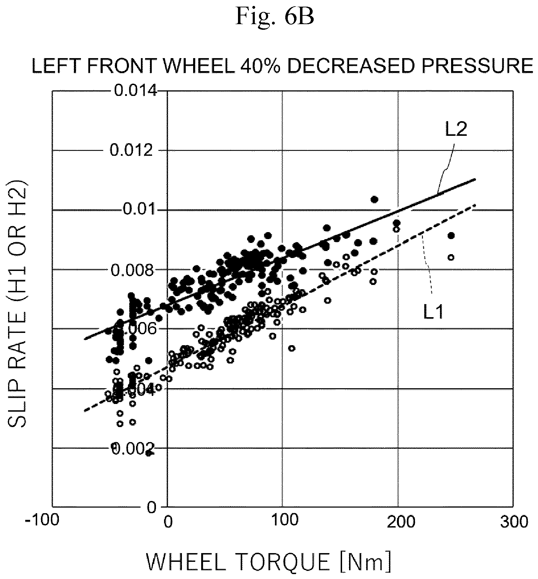

When all the tires $T_{FL}$, $T_{FR}$, $T_{RL}$, $T_{RR}$ have normal internal pressure, the slope C1 of the straight line L1 and the slope C2 of the straight line L2 converge into a constant range as illustrated in FIG. 6A. When the driving wheel tire has a decreased pressure, a slip generating in the tire decreases, and the slip rate S with respect to the same wheel torque WT becomes small. Therefore, the slope of the regression line changes in a direction of decrease. In FIG. 6B, which is a graph indicating this fact, the tire $T_{FL}$ is a driving wheel tire and a relationship between the wheel torque WT and the comparison value H1 or H2 when only the tire $T_{FL}$ has a decreased pressure of 40% is indicated. As understood from the graph of FIG. 6B, the slope C1 of the straight line L1 has changed from the state of FIG. 6A in a direction of decrease and has diverged from the slope C2 of the straight line L2.

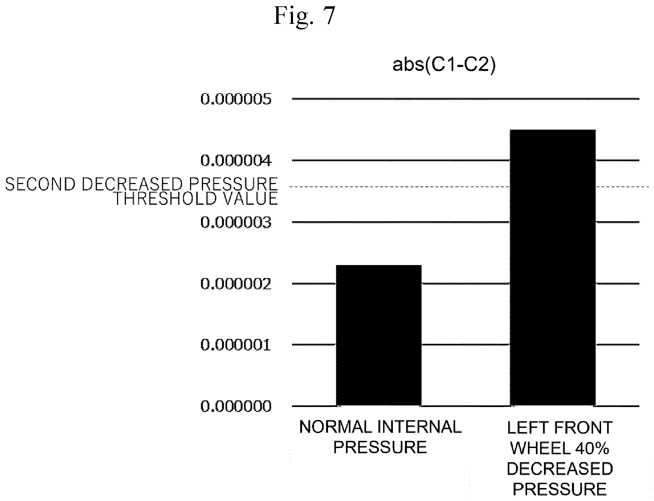

FIG. 7 is a chart comparing an absolute value of a difference between the slope C1 and the slope C2 in the state of FIG. 6A (a state in which all the tires have normal internal pressure), with an absolute value of a difference between the slope C1 and slope C2 in the state of FIG. 6B (a state in which only the tire $T_{FL}$ has a decreased pressure of 40%). As understood from FIG. 7, by defining in advance the absolute value of the difference between the slope C1 and the slope C2 in a case where either the left or right driving wheel tire has a decreased pressure of a predetermined proportion from the normal internal pressure as the second decreased pressure threshold value, the absolute value (abs(C1 - C2)) of the difference between the slope C1 and the slope C2 can be used as the second decreased pressure index.

The second decreased pressure index may be a difference between the slope C1 and the slope C2 in consideration of a positive/negative sign in addition to the absolute value of the difference between the slope C1 and the slope C2. The second decreased pressure index may be a ratio between the slope C1 and the slope C2. That is, the second decreased pressure index can be an index that diverges from a predetermined value as either of the driving wheel tires of the vehicle 1 has more decreased pressure. Further, in a case where the vehicle 1 is a 4WD vehicle or the like, when the driving wheel tire and the following wheel tire are not fastened, by assuming the tire of a wheel on which a larger driving force is applied to be the driving wheel tire, and taking into consideration a distribution of the driving force, the above-described second decreased pressure index is applicable.

(8) The respective steps of the method for detecting decreased pressure according to the above-described embodiment may be executed by a plurality of computers. That is, at least a part of the steps S1 to S6 may be executed by another external computer or the like to be connected to the apparatus for detecting decreased pressure 2.

Examples

Hereinafter, an example of the present invention will be described in detail. However, the present invention is not limited to the following example.

<Experimental Condition>

A gasoline engine-type FF (front-engine/front-wheel drive) vehicle to which tires in a size 225/55R18 were mounted on four wheels was made to travel on an ordinary road in Europe. The traveling speed was set to 40 km to 100 km per hour. The respective tires all had normal internal pressure. Based on data obtained during the traveling, a method for detecting decreased pressure (example) based on the first decreased pressure index and the second decreased pressure index of the above-described embodiment and a method for detecting decreased pressure (comparative example) based only on the first decreased pressure index were executed, and it was verified whether or not the decreased pressure alert is erroneously outputted even though the tires had normal internal pressure.

More specifically, in the example and the comparative example, the index of the above-described embodiment for comparing the average rotation speeds between the pair of the tire $T_{FL}$ and the tire $T_{RR}$, and the pair of the tire $T_{FR}$ and the tire $T_{RL}$ was used as the first decreased pressure index. In both the example and the comparative example, the first decreased pressure threshold value was 0.25. Further, in the example, the index of the above-described embodiment for comparing the ratio of the integration value of the gain in the second frequency band (37 Hz to 45 Hz) with respect to the integration value of the gain in the first frequency band (37 Hz to 61 Hz) in the frequency spectrums of the rotation speed signals of the rear axle tires between the coaxial left and right wheel tires was used as the second decreased pressure index. The second decreased pressure threshold value in the example was 0.15 (value equivalent to 40% decreased pressure). Thus, since the first decreased pressure threshold value and the second decreased pressure threshold value were both predetermined values, operation and traveling for the decreased pressure threshold value initialization were not particularly performed.

<Experimental Result>

The calculated first decreased pressure index and second decreased pressure index were as Table 1 below. As shown in Table 1, the calculated first decreased pressure index exceeded the first decreased pressure threshold value due to individual differences of the tires. Therefore, in the method for detecting decreased pressure according to the comparative example, the decreased pressure alert was output. On the other hand, as shown in Table 1, the calculated second decreased pressure index was equal to or less than the second decreased pressure threshold value, and therefore the decreased pressure alert was not output by the method for detecting decreased pressure according to the example. From the above, it was confirmed that the decreased pressure is appropriately detected even when the initialization is omitted in the method for detecting decreased pressure according to the example.

[Table 1]

|  | Example | Comparative Example |
|---|---|---|
| First Decreased Pressure Index | 0.3 | 0.3 |
| Second Decreased Pressure Index | 0.013 | - |

(continued)

|  | Example | Comparative Example |
|---|---|---|
| Alert or Not | No Alert | Alert |

LIST OF REFERENCE NUMERALS

| 1 | Vehicle |
|---|---|
| 2 | Apparatus for detecting decreased pressure |
| 20 | Speed acquisition unit |
| 21 | First index calculation unit |
| 22 | Second index calculation unit |
| 23 | Decreased pressure detection unit |
| V1 | Rotation speed of left front wheel tire |
| V2 | Rotation speed of right front wheel tire |
| V3 | Rotation speed of left rear wheel tire |
| V4 | Rotation speed of right rear wheel tire |
| P1 | First decreased pressure index |
| P21, P22 | Second decreased pressure index |
| Th1 | First decreased pressure threshold value |
| Th21, Th22 | Second decreased pressure threshold value |

An apparatus for detecting decreased pressure includes a speed acquisition unit, a first index calculation unit, a second index calculation unit, and a decreased pressure detection unit. The speed acquisition unit acquires rotation speeds of a plurality of tires mounted to a vehicle. The first index calculation unit calculates a first decreased pressure index as an index for comparing the rotation speeds of the plurality of tires based on the rotation speeds. The second index calculation unit calculates a second decreased pressure index as an index different from the first decreased pressure index. The decreased pressure detection unit determines that at least one tire has a decreased pressure when both of the first decreased pressure index and the second decreased pressure index indicate that the at least one tire has a decreased pressure.

**Claims**

1. An apparatus for detecting decreased pressure (2), comprising:

   a speed acquisition unit (20) that is configured to acquire rotation speeds of a plurality of tires ($T_{FL}$, $T_{FR}$, $T_{RL}$, $T_{RR}$) mounted to a vehicle (1) from rotation speed signals indicating the rotation speeds of the plurality of tires ($T_{FL}$, $T_{FR}$, $T_{RL}$, $T_{RR}$);
   a first index calculation unit (21) that is configured to calculate a first decreased pressure index as an index for comparing the rotation speeds of the plurality of tires ($T_{FL}$, $T_{FR}$, $T_{RL}$, $T_{RR}$) based on the rotation speeds;
   a second index calculation unit (22) that is configured to calculate a second decreased pressure index as an index different from the first decreased pressure index and as an index that changes when at least one tire among the plurality of tires ($T_{FL}$, $T_{FR}$, $T_{RL}$, $T_{RR}$) has a decreased pressure; and
   a decreased pressure detection unit (23) that is configured to determine that at least one tire among the plurality of tires has a decreased pressure when both of the first decreased pressure index and the second decreased pressure index indicate that the at least one tire has a decreased pressure.

2. The apparatus for detecting decreased pressure (2) according to claim 1, wherein the first decreased pressure index is an index that converges to a first value as the rotation speeds of the respective plurality of tires ($T_{FL}$, $T_{FR}$, $T_{RL}$, $T_{RR}$) become closer to a mean value of the rotation speeds of the plurality of tires ($T_{FL}$, $T_{FR}$, $T_{RL}$, $T_{RR}$), and diverges from the first value as a rotation speed of the at least one tire diverges from the mean value.

3. The apparatus for detecting decreased pressure (2) according to claim 1 or 2, wherein the second decreased pressure index is an index calculated based on the rotation speed signals.

4. The apparatus for detecting decreased pressure (2) according to claim 3, wherein the second decreased pressure index is an index that converges to a second value as frequency characteristics of rotation speed signals of coaxial tires among the plurality of tires ($T_{FL}$, $T_{FR}$, $T_{RL}$, $T_{RR}$) become closer to one another, and diverges from the second value as the frequency characteristics of the rotation speed signals of the coaxial tires diverge from one another.

5. The apparatus for detecting decreased pressure (2) according to claim 4, wherein the second decreased pressure index is an index for comparing a ratio of an integration value of a gain in a second frequency band (F2) with respect to an integration value of a gain in a first frequency band (F 1) in a frequency spectrum of the rotation speed signal between the coaxial left and right wheel tires.

6. The apparatus for detecting decreased pressure (2) according to claim 4, wherein the second decreased pressure index is an index for comparing torsional resonance frequencies of the plurality of tires between the coaxial left and right wheel tires.

7. The apparatus for detecting decreased pressure according to claim 1 or 2, wherein the second decreased pressure index is an index for comparing regression coefficients between left and right of the vehicle (1), and the regression coefficient indicates a relationship between a comparison value for comparing a rotation speed of a driving wheel tire ($T_{FL}$, $T_{FR}$) with a rotation speed of a following wheel tire ($T_{RL}$, $T_{RR}$) among the rotation speeds and a value indicating a driving force of the vehicle (1).

8. The apparatus for detecting decreased pressure (2) according to any one of claim 1 to 7, further comprising a decreased pressure alert unit (24) that is configured to generate a decreased pressure alert when the decreased pressure detection unit (23) determines that the at least one tire has a decreased pressure.

9. A method for detecting decreased pressure of tire executed by one or a plurality of computers, comprising:

acquiring rotation speeds of a plurality of tires mounted to a vehicle from rotation speed signals indicating the rotation speeds of the plurality of tires;
calculating a first decreased pressure index as an index for comparing the rotation speeds of the plurality of tires based on the rotation speeds;
calculating a second decreased pressure index as an index different from the first decreased pressure index and as an index that changes when at least one tire among the plurality of tires has a decreased pressure; and
determining that at least one tire among the plurality of tires has a decreased pressure when both of the first decreased pressure index and the second decreased pressure index indicate that the at least one tire has a decreased pressure.

10. A program for detecting decreased pressure that causes one or a plurality of computers to execute:

acquiring rotation speeds of a plurality of tires mounted to a vehicle from rotation speed signals indicating the rotation speeds of the plurality of tires;
calculating a first decreased pressure index as an index for comparing the rotation speeds of the plurality of tires based on the rotation speeds;
calculating a second decreased pressure index as an index different from the first decreased pressure index and as an index that changes when at least one tire among the plurality of tires has a decreased pressure; and
determining that at least one tire among the plurality of tires has a decreased pressure when both of the first decreased pressure index and the second decreased pressure index indicate that the at least one tire has a decreased pressure.

# Fig. 1

APPARATUS FOR
DETECTING DECREASED
PRESSURE

FL FR

$T_{FL}$ $T_{FR}$

6 6

5

RL RR

$T_{RL}$ $T_{RR}$

6 6

# Fig. 2

**APPARATUS FOR DETECTING DECREASED PRESSURE (CONTROL UNIT)** — 2

**CPU** — 12

- SPEED ACQUISITION UNIT — 20
- FIRST INDEX CALCULATION UNIT — 21
- SECOND INDEX CALCULATION UNIT — 22
- DECREASED PRESSURE DETECTION UNIT — 23
- DECREASED PRESSURE ALERT UNIT — 24

**I/O INTERFACE** — 11

**STORAGE DEVICE** — 15

**RAM** — 14

**ROM** — 13

**PROGRAM** — 9

— 3

— 6
— 6
— 6
— 6

— 8

Fig. 3

Fig. 4A

NORMAL INTERNAL PRESSURE

Fig. 4B

LEFT REAR WHEEL 30% DECREASED PRESSURE

Fig. 5A

NORMAL INTERNAL PRESSURE

Fig. 5B

LEFT FRONT WHEEL 40% DECREASED PRESSURE

## Fig. 6A

NORMAL INTERNAL PRESSURE

Fig. 6B

LEFT FRONT WHEEL 40% DECREASED PRESSURE

Fig. 7

Europäisches
Patentamt
European
Patent Office
Office européen
des brevets

# EUROPEAN SEARCH REPORT

Application Number

EP 23 21 6666

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2005 004910 A1 (CONTINENTAL TEVES AG & CO OHG [DE]; CONTINENTAL AG [DE]) 1 September 2005 (2005-09-01) | 1-4,6, 8-10 | INV. B60C23/06 |
| Y | * paragraph [0006] - paragraph [0042] * ----- | 5,7 | |
| Y | US 8 397 559 B2 (FISCHER DANIEL [DE]; IRTH MARKUS [DE] ET AL.) 19 March 2013 (2013-03-19) * column 5 - column 11; figures 1-7 * ----- | 5 | |
| Y | EP 0 832 768 B1 (DENSO CORP [JP]; NIPPON SOKEN [JP]) 28 August 2002 (2002-08-28) * paragraph [0015] - paragraph [0106]; figures 1-29 * ----- | 7 | |
| X | DE 10 2006 032212 A1 (CONTINENTAL TEVES AG & CO OHG [DE]) 8 March 2007 (2007-03-08) * the whole document * ----- | 1 | |

TECHNICAL FIELDS
SEARCHED      (IPC)

B60C

The present search report has been drawn up for all claims

| Place of search | Date of completion of the search | Examiner |
|---|---|---|
| Munich | 17 May 2024 | Billen, Karl |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.........................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                        EP 23 21 6666

17-05-2024

| Patent document cited in search report | Publication date | Patent family member(s) | | Publication date |
|---|---|---|---|---|
| DE 102005004910 A1 | 01-09-2005 | DE | 102005004910 A1 | 01-09-2005 |
| | | EP | 1711355 A1 | 18-10-2006 |
| | | WO | 2005072995 A1 | 11-08-2005 |
| US 8397559 B2 | 19-03-2013 | DE | 102008038579 A1 | 05-03-2009 |
| | | EP | 2190682 A1 | 02-06-2010 |
| | | US | 2010211250 A1 | 19-08-2010 |
| | | WO | 2009030660 A1 | 12-03-2009 |
| EP 0832768 B1 | 28-08-2002 | DE | 69714930 T2 | 28-05-2003 |
| | | EP | 0832768 A2 | 01-04-1998 |
| | | US | 5982279 A | 09-11-1999 |
| DE 102006032212 A1 | 08-03-2007 | DE | 102006032212 A1 | 08-03-2007 |
| | | EP | 1915262 A1 | 30-04-2008 |
| | | US | 2008276699 A1 | 13-11-2008 |
| | | WO | 2007020202 A1 | 22-02-2007 |

EPO FORM P0459

**EP 4 397 512 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005053263 A